# EUROPEAN PATENT SPECIFICATION

(11) **EP 3 010 949 B1**
(45) Date of publication and mention of the grant of the patent: **19.07.2017**
(21) Application number: 14726609.2
(22) Date of filing: 27.05.2014
(51) Int. Cl.: C08G 18/48, C08H 7/00, C08G 18/64, C08G 65/26

(54) **TANNIN-CONTAINING POLYOLS, THEIR PRODUCTION AND USE**
TANNINHALTIGE POLYOLE, DEREN HERSTELLUNG UND VERWENDUNG
POLYOLS À BASE DE TANNIN, LEUR PRODUCTION ET UTILISATION

(30) Priority: 18.06.2013 EP 13172508
(43) Date of publication of application: 27.04.2016
(73) Proprietor: BASF SE, 67056 Ludwigshafen am Rhein (DE)
(72) Inventor: KöNIG, Christian, 68165 Mannheim (DE); KOCH, Sebastian, 49448 Lemförde (DE); GATTI, Michele, 68163 Mannheim (DE)
(74) Representative: BASF IP Association
(86) International application number: PCT/EP2014/060949
(87) International publication number: WO 2014/202351

(56) References cited:
- EP-A1- 1 923 417
- US-A- 3 654 194
- US-A1- 2012 232 180

## Description

The present invention relates to tannin-containing polyols, their production and use.

Polyols, in particular polyether polyols, are manufactured in great amounts and are used, inter alia, for the production of polyurethanes (PU), for example PU soft foams or PU rigid foams.

There has been a growing demand in the industry to provide polyols produced using natural raw materials. In this context, the term "natural raw materials" refers to materials from renewable sources, like trees or other naturally growing plants.

US 3,546,199 and US 3,654,194 disclose a process for producing lignin and tannin alkoxylates by using ethylene carbonate as reagent and solvent, involving NaOH or KOH as catalysts. The use of ethylene carbonate and the use of NaOH or KOH as catalyst make a work-up necessary for use in PU applications. The viscosity of the obtained products is still relatively high, considering the OH number.

Thus, the known products and processes have some disadvantages. For example, the known processes often lead to highly viscous products which cannot properly be used for the production of polyurethanes. Furthermore, most often a complicated and expensive work-up procedure is required, which also leads to the production of waste and a low efficiency with regard to the used starting materials.

Thus, one object of the present invention was to overcome the disadvantages mentioned above, for example the necessity for a tedious work-up procedure. In particular, it was one object of the present invention to obtain liquid products which can be used to produce polyurethane products.

Another object was to provide a polyol which is at least partially based on sustainable (i. e. naturally occurring and renewable) raw materials (as opposed to mineral oil based raw materials).

Surprisingly, the inventors have found that the obtained products also have a high pentane compatibility in comparison to standard polyols based on polyfunctional alcohols such as glycerin or sorbitol.

Besides, the inventive polyols may provide for improved flame protection in the resulting polyurethanes.

The object of the present invention is, inter alia, a process for the production of a tannin containing polyol P by reacting 1 to 30 % by weight tannin T, 1 to 30 % by weight of at least one polyol S with a functionality of between 2 and 6 and at least one alkylene oxide A with 2 to 4 C-atoms per molecule, in the presence of between 100 ppm and 5000 ppm of at least one basic catalyst C, each based on the cumulative amount of T, S, A and C.

Other objects of the present invention include
- a tannin containing polyol P, obtainable by the inventive process,
- the use of a tannin containing polyol P, obtainable by the inventive process, for the production of polyurethanes, and
- a tannin containing polyol P with a viscosity of between 500 and 80000 mPas, containing 1 to 30 % by weight tannin T, 1 to 30 % by weight of at least one polyol S with a functionality of between 2 and 6 and at least one alkylene oxide A with 2 to 4 C-atoms per molecule, each based on the cumulative amount of T, S, A and C, obtained by reaction of components T, S and A in the presence of between 100 ppm and 5000 ppm of at least one basic catalyst C.

The tannin-containing polyols of the present invention may advantageously be used for the production of polyurethanes, by reaction with at least one di- or polyisocyanate. Furthermore, the inventive tanning-containing polyols and the polyols obtainable by the inventive process may also be used for cosmetics applications without a previous work-up.

In a preferred embodiment of the inventive process, 40 to 90 % by weight, preferably 50 to 80 % by weight, based on the cumulative amount of T, S, A and C, of alkylene oxide A is used.

In another embodiment of the inventive process, polyol P differs from polyol S.

In another preferred embodiment of the inventive process, the tannin containing polyol P is liquid at 25 °C.

In another embodiment of the inventive process, the tannin containing polyol P has a viscosity of between 200 to 80000 mPas, preferably between 200 and 30000 mPas.

In another embodiment of the inventive process, the tannin T is selected from hydrolysable and/ or non-hydrolysable tannins.

In another embodiment of the inventive process, the tannin T is selected from myrobalan and/or mimosa.

In another embodiment of the inventive process, the polyol S is selected from glycerine, sorbitol, diethylene glycol, dipropylene glycol, trimethylol propane, toluene diamine TMP, TDA, ethylene glycol and EO- and/ or PO-containing polyols and mixtures thereof, preferably from glycerine and /or dipropylene glycol.

In another embodiment of the inventive process, the alkylene oxide A is selected from ethylene oxide and/ or propylene oxide, preferably propylene oxide.

In another embodiment of the inventive process, the catalyst C is a basic organic or inorganic catalyst, preferably a basic organic catalyst.

In another embodiment of the inventive process, the basic catalyst C is selected from KOH, CsOH, NaOH and/ or nitrogen-containing catalysts, preferably from nitrogen-containing catalysts.

In a preferred embodiment of the inventive process, the basic catalyst C is selected from DMEOA and/ or imidazole, preferably imidazole.

In another embodiment of the inventive process, 5 to 25 % by weight of tannin T is used, based on the cumulative amount of T, S, A and C.

In another embodiment of the inventive process, 4 to 25 % by weight of polyol S is used, based on the cumulative amount of T, S, A and C.

In another embodiment of the inventive process, 100 ppm to 5000 ppm of catalyst C is used, based on the cumulative amount of T, S, A and C.

### Examples

In the following section, a number of examples are given to illustrate some aspects of the present invention.
The hydroxyl number was determined in accordance with DIN 53240 (DIN = "Deutsche Industri-enorm", i. e. German industry standard).
The viscosity of the polyols was, unless indicated otherwise, determined at 25°C in accordance with DIN EN ISO 3219 by means of a Rheotec RC20 rotational viscometer using the spindle CC 25 DIN (spindle diameter:12.5 mm; internal diameter of measuring cylinder: 13.56 mm) at a shear rate of 50 /1s.

The pentane compatibility was determined by stepwise addition of pentane to the product. To exactly 100 g of sample pentane was added and mixed. If the mixture was neither turbid nor biphasic more pentane was added and mixed again. In case the mixture was biphasic pentane was evaporated at room temperature until a homogeneous and clear product was obtained. The amount of added pentane was determined by comparing the weight of the mixture with the weight of the starting component. In case the mixture was turbid the sample was sealed and stored at room temperature until a clear phase separation occurred. Afterwards the same process as described above for biphasic systems was applied.

### Comparative example A

Lupranol 3300 is a trifunctional polyether polyol based on glycerine. It contains mostly secondaryhydroxyl groups and an OHv of 400 mg KOH/g sample. The pentane compatibility at room temperature is 35%.

### Comparative example B

Lupranol® 9346 is a polyether polyol based on sucrose. It contains mostly secondary hydroxyl groups and an OHv of 450 mg KOH/g sample (Viscosity (25°C): 18400 mPa*s). The pentane compatibility at room temperature is 12%.

### Comparative example C

Polyether polyol based on Sucrose. It contains mostly secondary hydroxyl groups and an OHv of 417 mg KOH/g sample (Viscosity (25°C): 30000 mPa*s). The pentane compatibility at room temperature is 13%.

### Comparative example D

Polyether polyol based on Sucrose. It contains mostly secondary hydroxyl groups and an OHv of 511 mg KOH/g sample (Viscosity (25°C): 30000 mPa*s). The pentane compatibility at room temperature is 9%.

### Comparative example E

Polyether polyol based on Sucrose. It contains mostly secondary hydroxyl groups and an OHv of 519 mg KOH/g sample (Viscosity (25°C): 74179 mPa*s). The pentane compatibility at room temperature is 7%.

### Example 1

36.2 g of glycerine, 36.2 g of Myrobalan and 500 ppm of imidazole were placed in a 300 mL reactor. The reactor was sealed, flushed with nitrogen and the stirrer was started. The temperature was increased to 120 °C
and 167.5 g of PO were added. After complete addition of the PO the reaction mixture was stirred for 9 hours and half. The mixture was subsequently evacuated under reduced pressure for 40 minutes at 100 °C. The final product was obtained as a liquid (221.1 g) at room temperature (25 °C).
Hydroxyl number: 527 mg KOH/g
Viscosity (25°C): 2930 mPa*s
Pentane compatibility: 10.7%

### Example 2

36.2 g of glycerine, 36.2 g of Mimosa and 500 ppm of imidazole were placed in a 300 mL reactor. The reactor was sealed, flushed with nitrogen and the stirrer was started. The temperature was increased to 120 °C
and 167.5 g of PO were added. After complete addition of the PO the reaction mixture was stirred for another 14 hours and 45 minutes. The mixture was subsequently evacuated under reduced pressure for 40 minutes at 100 °C. The final product was obtained as a liquid at room temperature (219.0 g).
Hydroxyl number: 515.5 mg KOH/g
Viscosity (25°C): 5560 mPa*s
Pentane compatibility: 10.7%

### Example 3

27.6 g of glycerine, 27.6 g of Mimosa and 500 ppm of imidazole were placed in a 300 mL reactor. The reactor was sealed, flushed with nitrogen and the stirrer was started. The temperature was increased to 120 °C
and 184.7 g of PO were added. After complete addition of the PO the reaction mixture was stirred for another 12 hours. The mixture was subsequently evacuated under reduced pressure for 40 minutes at 100 °C. The final product was obtained as a liquid at room temperature (218.0 g).
Hydroxyl number: 399.5 mg KOH/g
Viscosity (25°C): 1970 mPa*s
Pentane compatibility: 21.3%

### Example 4

27.6 g of glycerine, 27.6 g of Myrobalan and 500 ppm of imidazole were placed in a 300 mL reactor. The reactor was sealed, flushed with nitrogen and the stirrer was started. The temperature was increased to 120 °C and 184.7 g of PO were added. After complete addition of the PO the reaction mixture was stirred for another 12 hours and half. The mixture was subsequently evacuated under reduced pressure for 40 minutes at 100 °C. The final product was obtained as a liquid at room temperature (214.0 g).
Hydroxyl number: 412.9 mg KOH/g
Viscosity (25°C): 1400 mPa*s
Pentane compatibility: 20.0%

### Example 5

17.2 g of glycerine, 17.2 g of Mimosa and 1000 ppm of imidazole were placed in a 300 mL reactor. The reactor was sealed, flushed with nitrogen and the stirrer was started. The temperature was increased to 130 °C
and 205.4 g of PO were added. After complete addition of the PO the reaction mixture was stirred for another 4 hours. The mixture was subsequently evacuated under reduced pressure for 40 minutes at 100 °C. The final product was obtained as a liquid at room temperature (208.0 g).
Hydroxyl number: 273.7 mg KOH/g
Viscosity (25°C): 701 mPa*s

### Example 6

17.2 g of glycerine, 17.2 g of Mimosa and 1000 ppm of imidazole (50% water solution) were placed in a 300 mL reactor. The reactor was sealed, flushed with nitrogen and the stirrer was started. The temperature was increased to 130 °C and 205.4 g of PO were added. After complete addition of the PO the reaction mixture was stirred for another 4 hours. The mixture was subsequently evacuated under reduced pressure for 40 minutes at 100 °C. The final product was obtained as a liquid at room temperature (206.4 g).
Hydroxyl number: 270.6 mg KOH/g
Viscosity (25°C): 698 mPa*s
Pentane compatibility: >100%

### Example 7

20.7 g of glycerine, 20.7 g of Mimosa and 1000 ppm of imidazole (50% water solution) were placed in a 300 mL reactor. The reactor was sealed, flushed with nitrogen and the stirrer was started. The temperature was increased to 130 °C and 198.5 g of PO were added. After complete addition of the PO the reaction mixture was stirred for another 4 hours. The mixture was subsequently evacuated under reduced pressure for 40 minutes at 100 °C. The final product was obtained as a liquid at room temperature (211.0 g).
Hydroxyl number: 315.8 mg KOH/g
Viscosity (25°C): 859 mPa*s
Pentane compatibility: 37.1%

### Example 8

27.6 g of glycerine, 27.6 g of Mimosa and 1000 ppm of imidazole (50% water solution) were placed in a 300 mL reactor. The reactor was sealed, flushed with nitrogen and the stirrer was started. The temperature was increased to 130 °C and 184.7 g of PO were added. After complete addition of the PO the reaction mixture was stirred for another 4 hours. The mixture was subsequently evacuated under reduced pressure for 40 minutes at 100 °C. The final product was obtained as a liquid at room temperature (219.0 g).
Hydroxyl number: 410.6 mg KOH/g
Viscosity (25°C): 1940 mPa*s
Pentane compatibility: 20.0%

### Example 9

34.5 g of glycerine, 34.5 g of Mimosa and 1000 ppm of imidazole (50% water solution) were placed in a 300 mL reactor. The reactor was sealed, flushed with nitrogen and the stirrer was started. The temperature was increased to 130 °C and 170.9 g of PO were added. After complete addition of the PO the reaction mixture was stirred for another 4 hours. The mixture was subsequently evacuated under reduced pressure for 40 minutes at 100 °C. The final product was obtained as a liquid at room temperature (225.4.0 g).
Hydroxyl number: 519.9 mg KOH/g
Viscosity (25°C): 4290 mPa*s
Pentane compatibility: 10.7%

### Example 10

17.2 g of glycerine, 17.2 g of Myrobalan and 1000 ppm of imidazole (50% water solution) were placed in a 300 mL reactor. The reactor was sealed, flushed with nitrogen and the stirrer was started. The temperature was increased to 130 °C and 205.4 g of PO were added. After complete addition of the PO the reaction mixture was stirred for another 4 hours. The mixture was subsequently evacuated under reduced pressure for 40 minutes at 100 °C. The final product was obtained as a liquid at room temperature (225.4.0 g).
Hydroxyl number: 271.3 mg KOH/g
Viscosity (25°C): 602 mPa*s
Pentane compatibility: >100%

### Example 11

20.7 g of glycerine, 20.7 g of Myrobalan and 1000 ppm of imidazole (50% water solution) were placed in a 300 mL reactor. The reactor was sealed, flushed with nitrogen and the stirrer was started. The temperature was increased to 130 °C and 198.5 g of PO were added. After complete addition of the PO the reaction mixture was stirred for another 4 hours. The mixture was subsequently evacuated under reduced pressure for 40 minutes at 100 °C. The final product was obtained as a liquid at room temperature (215.9 g).
Hydroxyl number: 325.1 mg KOH/g
Viscosity (25°C): 781 mPa*s
Pentane compatibility: 35.1%

### Example 12

27.6 g of glycerine, 27.6 g of Myrobalan and 1000 ppm of imidazole (50% water solution) were placed in a 300 mL reactor. The reactor was sealed, flushed with nitrogen and the stirrer was started. The temperature was increased to 130 °C and 184.7 g of PO were added. After complete addition of the PO the reaction mixture was stirred for another 4 hours. The mixture was subsequently evacuated under reduced pressure for 40 minutes at 100 °C. The final product was obtained as a liquid at room temperature (224.2 g).
Hydroxyl number: 414.4 mg KOH/g
Viscosity (25°C): 1390 mPa*s
Pentane compatibility: 20.0%

### Example 13

34.5 g of glycerine, 34.5 g of Myrobalan and 1000 ppm of imidazole (50% water solution) were placed in a 300 mL reactor. The reactor was sealed, flushed with nitrogen and the stirrer was started. The temperature was increased to 130 °C and 170.9 g of PO were added. After complete addition of the PO the reaction mixture was stirred for another 4 hours. The mixture was subsequently evacuated under reduced pressure for 40 minutes at 100 °C. The final product was obtained as a liquid at room temperature (217.2 g).
Hydroxyl number: 507.2 mg KOH/g
Viscosity (25°C): 2390 mPa*s
Pentane compatibility: 13.8%

### Example 14

80.2 g of a glycerine based polyetherols (OHv = 400), 38.6 g of Mimosa and 1000 ppm of imidazole (50% water solution) were placed in a 300 mL reactor. The reactor was sealed, flushed with nitrogen and the stirrer was started. The temperature was increased to 130 °C and 120.9 g of PO were added. After complete addition of the PO the reaction mixture was stirred for another 4 hours. The mixture was subsequently evacuated under reduced pressure for 40 minutes at 100 °C. The final product was obtained as a liquid at room temperature (216.6 g).
Hydroxyl number: 395.3 mg KOH/g
Viscosity (25°C): 3850 mPa*s
Pentane compatibility: 20.0%

### Example 15

65.8 g of a glycerine based polyetherols (OHv = 400), 42.1 g of Mimosa and 1000 ppm of imidazole (50% water solution) were placed in a 300 mL reactor. The reactor was sealed, flushed with nitrogen and the stirrer was started. The temperature was increased to 130 °C and 131.8 g of PO were added. After complete addition of the PO the reaction mixture was stirred for another 5 hours. The mixture was subsequently evacuated under reduced pressure for 40 minutes at 100 °C. The final product was obtained as a liquid at room temperature (217.4 g).
Hydroxyl number: 385.6 mg KOH/g
Viscosity (25°C): 6140 mPa*s
Pentane compatibility: 19.4%

### Example 16

54.7 g of a glycerine based polyetherols (Hydroxyl number = 400), 44.8 g of Mimosa and 1000 ppm of imidazole (50% water solution) were placed in a 300 mL reactor. The reactor was sealed, flushed with nitrogen and the stirrer was started. The temperature was increased to 130 °C and 140.3 g of PO were added. After complete addition of the PO the reaction mixture was stirred for another 5 hours. The mixture was subsequently evacuated under reduced pressure for 40 minutes at 100 °C. The final product was obtained as a liquid at room temperature (216.8 g).
Hydroxyl number: 384.0 mg KOH/g
Viscosity (25°C): 7910 mPa*s
Pentane compatibility: 19.4%

### Example 17

71.5 g of dipropylene glycol, 21.8 g of Mimosa and 1000 ppm of imidazole (50% water solution) were placed in a 300 mL reactor. The reactor was sealed, flushed with nitrogen and the stirrer was started. The temperature was increased to 130 °C and 146.4 g of PO were added. After complete addition of the PO the reaction mixture was stirred for another 5 hours. The mixture was subsequently evacuated under reduced pressure for 40 minutes at 100 °C. The final product was obtained as a liquid at room temperature (212.7 g).
Hydroxyl number: 408.8 mg KOH/g
Viscosity (25°C): 290 mPa*s
Pentane compatibility: 43.8%

### Example 18

116.6 g of sorbitol based polyetherols (Hydroxyl number = 490), 16.1 g of Mimosa and 1000 ppm of imidazole (50% water solution) were placed in a 300 mL reactor. The reactor was sealed, flushed with nitrogen and the stirrer was started. The temperature was increased to 130 °C and 107.0 g of PO were added. After complete addition of the PO the reaction mixture was stirred for another 5 hours. The mixture was subsequently evacuated under reduced pressure for 40 minutes at 100 °C. The final product was obtained as a liquid at room temperature (212.4 g).
Hydroxyl number: 381.8 mg KOH/g
Viscosity (25°C): 7540 mPa*s
Pentane compatibility: 22.5%

### Example 19

45.8 g of a glycerine based polyetherols (Hydroxyl number = 400), 47.0 g of Mimosa and 1000 ppm of imidazole (50% water solution) were placed in a 300 mL reactor. The reactor was sealed, flushed with nitrogen and the stirrer was started. The temperature was increased to 130 °C and 147.0 g of PO were added. After complete addition of the PO the reaction mixture was stirred for another 5 hours. The mixture was subsequently evacuated under reduced pressure for 40 minutes at 100 °C. The final product was obtained as a liquid at room temperature (222.8 g).
Hydroxyl number: 379.3 mg KOH/g
Viscosity (25°C): 8920 mPa*s
Pentane compatibility: 19.4%
Mimosa = tannin extract derived from the bark of the Black Wattle tree, a species of Acacia native to Australia
Myrobalan = tannin extract derived from the Myrobalan (Terminalia chebula) tree.

In comparison to comparative example C, the examples 3, 4, 8, 12, 14, 15, 16, 17, 18 and 19 show improved pentane compatibility by comparable OH-values. The viscosities of these examples are significantly reduced in comparison to comparative example C.

In comparison to comparative example D and E, the examples 1, 2, 9 and 13 show improved pentane compatibility by comparable OH-values. The viscosities of these examples are significantly reduced in comparison to comparative examples D and E.

In comparison to comparative example B, example 13 shows improved pentane compatibility by comparable OH-values. The viscosity of this example is significantly reduced in comparison to comparative example B.

Furthermore, due to the use of the preferred catalyst (organic, nitrogen-containing basic catalyst), no work-up is necessary after the reaction. The catalyst may remain in the product.

## Claims

1. Process for the production of a tannin containing polyol P by reacting 1 to 30 % by weight tannin T, 1 to 30 % by weight of at least one polyol S with a functionality of between 2 and 6 and at least one alkylene oxide A with 2 to 4 C-atoms per molecule, in the presence of between 100 ppm and 5000 ppm of at least one basic catalyst C, each based on the cumulative amount of T, S, A and C, wherein the catalyst C is a basic organic catalyst, selected from nitrogen-containing catalysts.

2. Process for the production of a tannin containing polyol P according to claim 1, wherein 40 to 90 % by weight, preferably 50 to 80 % by weight, based on the cumulative amount of T, S, A and C, of alkylene oxide A is used.

3. Process for the production of a polyol P according to claim 1 or 2, wherein polyol P differs from polyol S.

4. Process for the production of a polyol P according to any of the preceding claims, wherein the tannin containing polyol P is liquid at 25 °C.

5. Process for the production of a polyol P according to any of the preceding claims, wherein the tannin containing polyol P has a viscosity of between 200 to 80000 mPas, preferably between 200 and 30000 mPas.

6. Process for the production of a polyol P according to any of the preceding claims, wherein the tannin T is selected from hydrolysable and/or non-hydrolysable tannins.

7. Process for the production of a polyol P according to any of the preceding claims, wherein the tannin T is selected from myrobalan and/or mimosa.

8. Process for the production of a polyol P according to any of the preceding claims, wherein the polyol S is selected from glycerine, sorbitol, diethylene glycol, dipropylene glycol, trimethylol propane, toluene diamine TMP, TDA, ethylene glycol and EO- and/or PO-containing polyols and mixtures thereof, preferably from glycerine and/or dipropylene glycol.

9. Process for the production of a polyol P according to any of the preceding claims, wherein the alkylene oxide A is selected from ethylene oxide and/ or propylene oxide, preferably propylene oxide.

10. Process for the production of a polyol P according to any of the preceding claims, wherein the basic catalyst C is selected from DMEOA and/or imidazole, preferably imidazole.

11. Process for the production of a polyol P according to any of the preceding claims, wherein 5 to 25 % by weight of tannin T is used, based on the cumulative amount of T, S, A and C.

12. Process for the production of a polyol P according to any of the preceding claims, wherein 4 to 25 % by weight of polyol S is used, based on the cumulative amount of T, S, A and C.

13. Process for the production of a polyol P according to any of the preceding claims, wherein 100 ppm to 5000 ppm of catalyst C is used, based on the cumulative amount of T, S, A and C.

14. Tannin containing polyol P, obtainable by the process of any of claims 1 to 13.

15. Use of a tannin containing polyol P, obtainable by the process of any of claims 1 to 13, for the production of polyurethanes.

16. Tannin containing polyol P with a viscosity of between 500 and 80000 mPas, containing 1 to 30 % by weight tannin T, 1 to 30 % by weight of at least one polyol S with a functionality of between 2 and 6 and at least one alkylene oxide A with 2 to 4 C-atoms per molecule, each based on the cumulative amount of T, S, A and C, obtained by reaction of components T, S and A in the presence of between 100 ppm and 5000 ppm of at least one basic catalyst C, wherein the basic catalyst C is selected from nitrogen-containing catalysts.

17. Tannin containing polyol according to claim 16, containing 40 to 90 % by weight, preferably 50 to 85 % by weight, of alkylene oxide A.

18. Tannin containing polyol according to claim 16 or 17, wherein polyol P differs from polyol S.

19. Tannin containing polyol according to any of claims 16 to 18, wherein the tannin containing polyol P is liquid at 25 °C.

20. Tannin containing polyol according to any of claims 16 to 19, wherein the tannin containing polyol P has a viscosity of between 200 to 80000 mPas, preferably between 200 and 30000 mPas.

21. Tannin containing polyol according to any of claims 16 to 20, wherein the tannin T is selected from hydrolysable and/or non-hydrolysable tannins.

22. Tannin containing polyol according to any of claims 16 to 21, wherein the tannin T is selected from myrobalan and/or mimosa.

23. Tannin containing polyol according to any of claims 16 to 22, wherein the polyol S is selected from glycerine, sorbitol, diethylene glycol, dipropylene glycol, trimethylol propane, toluene diamine TMP, TDA, ethylene glycol and EO- and/or PO-containing polyols and mixtures thereof, preferably from glycerine and/or dipropylene glycol.

24. Tannin containing polyol according to any of claims 16 to 23, wherein the alkylene oxide A is selected from ethylene oxide and/or propylene oxide, preferably propylene oxide.

25. Tannin containing polyol according to any of claims 16 to 24, wherein the basic catalyst C is selected from DMEOA and/or imidazole, preferably imidazole.

26. Tannin containing polyol according to any of claims 16 to 25, wherein the tannin containing polyol contains 5 to 25 % by weight of tannin T, based on the cumulative amount of T, S, A and C.

27. Tannin containing polyol according to any of claims 16 to 26, wherein the tannin containing polyol contains 4 to 25 % by weight of polyol S, based on the cumulative amount of T, S, A and C.

28. Tannin containing polyol according to any of claims 16 to 27, wherein 100 ppm to 5000 ppm of catalyst C is used, based on the cumulative amount of T, S, A and C.

## Patentansprüche

1. Verfahren zur Herstellung eines tanninhaltigen Polyols P durch Umsetzung von 1 bis 30 Gew.-% Tannin T, 1 bis 30 Gew.-% mindestens eines Polyols S mit einer Funktionalität zwischen 2 und 6 und mindestens einem Alkylenoxid A mit 2 bis 4 C-Atomen pro Molekül in Gegenwart von zwischen 100 ppm und 5000 ppm mindestens eines basischen Katalysators C, jeweils bezogen auf die Gesamtmenge von T, S, A und C, wobei es sich bei dem Katalysator C um einen basischen organischen Katalysator handelt, der aus stickstoffhaltigen Katalysatoren ausgewählt wird.

2. Verfahren zur Herstellung eines tanninhaltigen Polyols P nach Anspruch 1, bei dem 40 bis 90 Gew.-%, vorzugsweise 50 bis 80 Gew.-%, bezogen auf die Gesamtmenge von T, S, A und C, Alkylenoxid A verwendet werden.

3. Verfahren zur Herstellung eines Polyols P nach Anspruch 1 oder 2, bei dem sich das Polyol P von dem Polyol S unterscheidet.

4. Verfahren zur Herstellung eines Polyols P nach einem der vorhergehenden Ansprüche, bei dem das tanninhaltige Polyol P bei 25 °C flüssig ist.

5. Verfahren zur Herstellung eines Polyols P nach einem der vorhergehenden Ansprüche, bei dem das tanninhaltige Polyol P eine Viskosität zwischen 200 und 80.000 mPas, vorzugsweise zwischen 200 und 30.000 mPas, aufweist.

6. Verfahren zur Herstellung eines Polyols P nach einem der vorhergehenden Ansprüche, bei dem das Tannin T aus hydrolysierbaren und/oder nicht hydrolysierbaren Tanninen ausgewählt wird.

7. Verfahren zur Herstellung eines Polyols P nach einem der vorhergehenden Ansprüche, bei dem das Tannin T aus Myrobalan und/oder Mimosa ausgewählt wird.

8. Verfahren zur Herstellung eines Polyols P nach einem der vorhergehenden Ansprüche, bei dem das Polyol S aus Glycerin, Sorbitol, Diethylenglykol, Dipropylenglykol, Trimethylolpropan, Toluoldiamin TMP, TDA, Ethylenglykol und EO- und/oder PO-haltigen Polyolen und Mischungen davon, vorzugsweise aus Glycerin und/oder Dipropylenglykol, ausgewählt wird.

9. Verfahren zur Herstellung eines Polyols P nach einem der vorhergehenden Ansprüche, bei dem das Alkylenoxid A aus Ethylenoxid und/oder Propylenoxid, vorzugsweise Propylenoxid, ausgewählt wird.

10. Verfahren zur Herstellung eines Polyols P nach einem der vorhergehenden Ansprüche, bei dem der basische Katalysator C aus DMEOA und/oder Imidazol, vorzugsweise Imidazol, ausgewählt wird.

11. Verfahren zur Herstellung eines Polyols P nach einem der vorhergehenden Ansprüche, bei dem 5 bis 25 Gew.-% Tannin T, bezogen auf die Gesamtmenge von T, S, A und C, verwendet werden.

12. Verfahren zur Herstellung eines Polyols P nach einem der vorhergehenden Ansprüche, bei dem 4 bis 25 Gew.-% Polyol S, bezogen auf die Gesamtmenge von T, S, A und C, verwendet werden.

13. Verfahren zur Herstellung eines Polyols P nach einem der vorhergehenden Ansprüche, bei dem 100 ppm bis 5000 ppm Katalysator C, bezogen auf die Gesamtmenge von T, S, A und C, verwendet werden.

14. Tanninhaltiges Polyol P, das durch das Verfahren nach einem der Ansprüche 1 bis 13 erhältlich ist.

15. Verwendung eines tanninhaltigen Polyols P, das durch das Verfahren nach einem der Ansprüche 1 bis 13 erhältlich ist, zur Herstellung von Polyurethanen.

16. Tanninhaltiges Polyol P mit einer Viskosität zwischen 500 und 80.000 mPas, das 1 bis 30 Gew.-% Tannin T, 1 bis 30 Gew.-% mindestens eines Polyols S mit einer Funktionalität zwischen 2 und 6 und mindestens ein Alkylenoxid A mit 2 bis 4 C-Atomen pro Molekül, jeweils bezogen auf die Gesamtmenge von T, S, A und C, enthält, erhalten durch Umsetzung der Komponenten T, S und A in Gegenwart von zwischen 100 ppm und 5000 ppm mindestens eines basischen Katalysators C, wobei der basische Katalysator C aus stickstoffhaltigen Katalysatoren ausgewählt ist.

17. Tanninhaltiges Polyol nach Anspruch 16, das 40 bis 90 Gew.-%, vorzugsweise 50 bis 85 Gew.-%, Alkylenoxid A enthält.

18. Tanninhaltiges Polyol nach Anspruch 16 oder 17, wobei sich das Polyol P von dem Polyol S unterscheidet.

19. Tanninhaltiges Polyol nach einem der Ansprüche 16 bis 18, wobei das tanninhaltige Polyol P bei 25°C flüssig ist.

20. Tanninhaltiges Polyol nach einem der Ansprüche 16 bis 19, wobei das tanninhaltige Polyol P eine Viskosität zwischen 200 und 80.000 mPas, vorzugsweise zwischen 200 und 30.000 mPas, aufweist.

21. Tanninhaltiges Polyol nach einem der Ansprüche 16 bis 20, wobei das Tannin T aus hydrolysierbaren und/oder nicht hydrolysierbaren Tanninen ausgewählt ist.

22. Tanninhaltiges Polyol nach einem der Ansprüche 16 bis 21, wobei das Tannin T aus Myrobalan und/oder Mimosa ausgewählt ist.

23. Tanninhaltiges Polyol nach einem der Ansprüche 16 bis 22, wobei das Polyol S aus Glycerin, Sorbitol, Diethylenglykol, Dipropylenglykol, Trimethylolpropan, Toluoldiamin TMP, TDA, Ethylenglykol und EO- und/oder PO-haltigen Polyolen und Mischungen davon, vorzugsweise aus Glycerin und/oder Dipropylenglykol, ausgewählt ist.

24. Tanninhaltiges Polyol nach einem der Ansprüche 16 bis 23, wobei das Alkylenoxid A aus Ethylenoxid und/oder Propylenoxid, vorzugsweise Propylenoxid, ausgewählt ist.

25. Tanninhaltiges Polyol nach einem der Ansprüche 16 bis 24, wobei der basische Katalysator C aus DMEOA und/oder Imidazol, vorzugsweise Imidazol, ausgewählt ist.

26. Tanninhaltiges Polyol nach einem der Ansprüche 16 bis 25, wobei das tanninhaltige Polyol 5 bis 25 Gew.-% Tannin T, bezogen auf die Gesamtmenge von T, S, A und C, enthält.

27. Tanninhaltiges Polyol nach einem der Ansprüche 16 bis 26, wobei das tanninhaltige Polyol 4 bis 25 Gew.-% Polyol S, bezogen auf die Gesamtmenge von T, S, A und C, enthält.

28. Tanninhaltiges Polyol nach einem der Ansprüche 16 bis 27, wobei 100 ppm bis 5000 ppm Katalysator C, bezogen auf die Gesamtmenge von T, S, A und C, verwendet werden.

## Revendications

1. Procédé de production d'un tanin contenant un polyol P par réaction de 1 à 30 % en poids de tanin T, 1 à 30 % en poids d'au moins un polyol S ayant une fonctionnalité comprise entre 2 et 6 et au moins un oxyde d'alkylène A avec 2 à 4 atomes C par molécule, en présence d'entre 100 ppm et 5000 ppm d'au moins un catalyseur basique C, chacun sur la base de la quantité cumulée de T, S, A et C, dans lequel le catalyseur C est un catalyseur organique basique, choisi parmi des catalyseurs contenant de l'azote.

2. Procédé de production d'un tanin contenant un polyol P selon la revendication 1, dans lequel 40 à 90 % en poids, de préférence 50 à 80 % en poids, sur la base de la quantité cumulée de T, S, A et C, d'oxyde d'alkylène A sont utilisés.

3. Procédé de production d'un polyol P selon la revendication 1 ou 2, dans lequel le polyol P diffère du polyol S.

4. Procédé de production d'un polyol P selon l'une quelconque des revendications précédentes, dans lequel le tanin contenant un polyol P est liquide à 25 °C.

5. Procédé de production d'un polyol P selon l'une quelconque des revendications précédentes, dans lequel le tanin contenant un polyol P a une viscosité comprise entre 200 et 80000 mPa.s, de préférence entre 200 et 30000 mPa.s.

6. Procédé de production d'un polyol P selon l'une quelconque des revendications précédentes, dans lequel le tanin T est choisi parmi des tanins hydrolysables et/ou non hydrolysables.

7. Procédé de production d'un polyol P selon l'une quelconque des revendications précédentes, dans lequel le tanin T est choisi parmi le myrobalane et/ou le mimosa.

8. Procédé de production d'un polyol P selon l'une quelconque des revendications précédentes, dans lequel le polyol S est choisi parmi la glycérine, le sorbitol, le diéthylène glycol, le dipropylène glycol, le triméthylolpropane, la toluènediamine, TMP, TDA, l'éthylène glycol et des polyols contenant EO et/ou PO et des mélanges de ceux-ci, de préférence parmi la glycérine et/ou le dipropylène glycol.

9. Procédé de production d'un polyol P selon l'une quelconque des revendications précédentes, dans lequel l'oxyde d'alkylène A est choisi parmi l'oxyde d'éthylène et/ou l'oxyde de propylène, de préférence l'oxyde de propylène.

10. Procédé de production d'un polyol P selon l'une quelconque des revendications précédentes, dans lequel le catalyseur basique C est choisi parmi DMEOA et/ou l'imidazole, de préférence l'imidazole.

11. Procédé de production d'un polyol P selon l'une quelconque des revendications précédentes, dans lequel 5 à 25 % en poids de tanin T sont utilisés, sur la base de la quantité cumulée de T, S, A et C.

12. Procédé de production d'un polyol P selon l'une quelconque des revendications précédentes, dans lequel 4 à 25 % en poids de polyol S sont utilisés, sur la base de la quantité cumulée de T, S, A et C.

13. Procédé de production d'un polyol P selon l'une quelconque des revendications précédentes, dans lequel 100 ppm à 5000 ppm de catalyseur C sont utilisés, sur la base de la quantité cumulée de T, S, A et C.

14. Tanin contenant un polyol P, pouvant être obtenu par le procédé de l'une quelconque des revendications 1 à 13.

15. Utilisation d'un tanin contenant un polyol P, pouvant être obtenu par le procédé de l'une quelconque des revendications 1 à 13, pour la production de polyuréthanes.

16. Tanin contenant un polyol P ayant une viscosité comprise entre 500 et 80000 mPa.s, contenant 1 à 30 % en poids de tanin T, 1 à 30 % en poids d'au moins un polyol S ayant une fonctionnalité comprise entre 2 et 6 et au moins un oxyde d'alkylène A avec 2 à 4 atomes C par molécule, chacun sur la base de la quantité cumulée de T, S, A et C, obtenu par réaction des composants T, S et A en présence d'entre 100 ppm et 5000 ppm d'au moins un catalyseur basique C, le catalyseur basique C étant choisi parmi des catalyseurs contenant de l'azote.

17. Tanin contenant un polyol selon la revendication 16, contenant 40 à 90 % en poids, de préférence 50 à 85 % en poids, d'oxyde d'alkylène A.

18. Tanin contenant un polyol selon la revendication 16 ou 17, dans lequel le polyol P diffère du polyol S.

19. Tanin contenant un polyol selon l'une quelconque des revendications 16 à 18, le tanin contenant un polyol P étant liquide à 25 °C.

20. Tanin contenant un polyol selon l'une quelconque des revendications 16 à 19, le tanin contenant un polyol P ayant une viscosité comprise entre 200 et 80000 mPa.s, de préférence entre 200 et 30000 mPa.s.

21. Tanin contenant un polyol selon l'une quelconque des revendications 16 à 20, le tanin T étant choisi parmi des tanins hydrolysables et/ou non hydrolysables.

22. Tanin contenant un polyol selon l'une quelconque des revendications 16 à 21, le tanin T étant choisi parmi le myrobalane et/ou le mimosa.

23. Tanin contenant un polyol selon l'une quelconque des revendications 16 à 22, dans lequel le polyol S est choisi parmi la glycérine, le sorbitol, le diéthylène glycol, le dipropylène glycol, le triméthylolpropane, la toluènediamine TMP, TDA, l'éthylène glycol et des polyols contenant l'oxyde d'éthylène et/ou l'oxyde de propylène et des mélanges de ceux-ci, de préférence parmi la glycérine et/ou le dipropylène glycol.

24. Tanin contenant un polyol selon l'une quelconque des revendications 16 à 23, dans lequel l'oxyde d'alkylène A est choisi parmi l'oxyde d'éthylène et/ou l'oxyde de propylène, de préférence l'oxyde de propylène.

25. Tanin contenant un polyol selon l'une quelconque des revendications 16 à 24, dans lequel le catalyseur basique C est choisi parmi DMEOA et/ou l'imidazole, de préférence l'imidazole.

26. Tanin contenant un polyol selon l'une quelconque des revendications 16 à 25, le tanin contenant un polyol contenant de 5 à 25 % en poids de tanin T, sur la base de la quantité cumulée de T, S, A et C.

27. Tanin contenant un polyol selon l'une quelconque des revendications 16 à 26, le tanin contenant un polyol contenant de 4 à 25 % en poids de polyol S, sur la base de la quantité cumulée de T, S, A et C.

28. Tanin contenant un polyol selon l'une quelconque des revendications 16 à 27, dans lequel de 100 ppm à 5000 ppm de catalyseur C est utilisé, sur la base de la quantité cumulée de T, S, A et C.
